# EUROPEAN PATENT SPECIFICATION

(11) **EP 2 865 148 B1**
(45) Date of publication and mention of the grant of the patent: **08.08.2018**
(21) Application number: 13732739.1
(22) Date of filing: 11.06.2013
(51) Int. Cl.: H04L 12/24, H04L 12/811, H04M 15/00, H04L 12/14, H04W 4/24

(54) **DYNAMIC MEDIA THROTTLING BASED ON DATA QUOTAS**
DYNAMISCHE MEDIENINHALTSDROSSELUNG AUF BASIS VON DATENQUOTEN
RALENTISSEMENT DYNAMIQUE DE CONTENU MULTIMÉDIA REPOSANT SUR DES QUOTAS DE DONNÉES

(30) Priority: 20.06.2012 US 201213528044
(43) Date of publication of application: 29.04.2015
(73) Proprietor: Cisco Technology, Inc., San Jose, CA 95134-1706 (US)
(72) Inventor: CHERVETS, Steven, Longmont, Colorado 80503 (US); FRIEDL, Stephan Edward, Frederick, Colorado 80504 (US)
(74) Representative: Kazi, Ilya
(86) International application number: PCT/US2013/045226
(87) International publication number: WO 2013/191963

(56) References cited:
- US-A1- 2007 133 603
- US-A1- 2010 017 506
- US-A1- 2010 287 256
- US-B1- 7 873 074
- Jiasi Chen, Amitabha Ghosh, Josphat Magutt, Mung Chiang: "QAVA: Quota Aware Video Adaptation", Princeton University, Princeton, New Jersey , 10 December 2012 (2012-12-10), pages 121-132, XP55080839, Retrieved from the Internet: URL:http://conferences.sigcomm.org/co-next /2012/eproceedings/conext/p121.pdf [retrieved on 2013-09-25]

## Description

### TECHNICAL FIELD

The present disclosure relates generally to monitoring and adjusting data consumption of a networked device.

### BACKGROUND

Internet Service Providers (ISPs) are introducing data quotas or caps to their internet services. This means that consumers no longer have access to an unlimited amount of internet data during a billing period. Specifically, consumption of video and audio (music) content can use up to the entire monthly data allotment in a few days and leave the consumer with large download overage fees. Recent legislation requires mobile operators to warn subscribers when they are approaching their data limits but provide no recourse for the subscriber aside from drastically reducing their data consumption through the end of their billing cycle.

US 7873074 discloses methods for managing bandwidth use in a VoIP network, in which the voice bandwidth utilized on a per call basis is adjusted. US 2007/0133603 discloses methods for conserving bandwidth by monitoring bit rate and incentivizing behaviour that reduces a user's bandwidth consumption.

US 2010/0017506 discloses a system that provides alerts informing the user of current consumption, expected future consumption, and recommendations for reducing data provider resources consumed. US 2010/0287256 discloses a social networking widget for a mobile device which extracts content from social networking services according to a bandwidth allocation of a usage plan associated with the mobile device.

Aspects of the invention are set out in the independent claims. Certain preferred features are set out in the dependent claims.

### BRIEF DESCRIPTION OF THE DRAWINGS

The accompanying drawings incorporated herein and forming a part of the specification illustrate the example embodiments.
FIG. 1 is a block diagram illustrating an example of bandwidth monitoring device deployed between a service provider and an endpoint.
FIG. 2 is a block diagram illustrating an example of bandwidth monitoring device coupled with a service provider.
FIG. 3 is a block diagram illustrating an example of bandwidth monitoring device coupled with an endpoint.
FIG. 4 is a block diagram of an example bandwidth monitoring device.
FIG. 5 is a block diagram of a computer system upon which an example embodiment may be implemented.
FIG. 6 illustrates an example methodology that modifies a data stream in response to determining that predicted data consumption will exceed a data allowance.
FIG. 7 illustrates an example of a methodology that modifies a data stream in response to determining that predicted data consumption will not exceed a data allowance.

### OVERVIEW OF EXAMPLE EMBODIMENTS

The following presents a simplified overview of the example embodiments in order to provide a basic understanding of some aspects of the example embodiments. This overview is not an extensive overview of the example embodiments. It is intended to neither identify key or critical elements of the example embodiments nor delineate the scope of the appended claims. Its sole purpose is to present some concepts of the example embodiments in a simplified form as a prelude to the more detailed description that is presented later.

In accordance with an example embodiment, there is disclosed herein an apparatus comprising a first interface for communicating with a provider that is providing a data stream to an endpoint, a second interface for providing the data stream to the endpoint, and bandwidth management logic coupled with the first interface and the second interface. The bandwidth management logic obtains data representative of a data allotment for a predefined time period. The bandwidth management logic obtains data representative of data usage for a portion of the predefined time period. The bandwidth management logic predicts data usage for the predefined time period based on the data representative of data usage for a portion of the predefined time period. The data stream being provided to the endpoint is modified in response to predicting that the data usage for the predefined time period will exceed the data allotment for the predefined time period. The modifying includes limiting or disabling data downloads for mobile hotspot client devices coupled with the endpoint.

In accordance with an example embodiment, there is disclosed herein logic encoded in a non-transitory computer readable medium for execution by a processor, and when executed operable to obtain data representative of a data allotment for a predefined time period and obtain data representative of data usage for a portion of the predefined time period. The logic is further operable to predict data usage for the predefined time period based on the data representative of data usage for a portion of the predefined time period and modify a data stream being provided to the endpoint in response to predicting that the data usage for the predefined time period will exceed the data allotment for the predefined time period. The modifying includes limiting or disabling data downloads for mobile hotspot client devices coupled with the endpoint.

In accordance with an example embodiment, there is disclosed herein a method that comprises obtaining data representative of a data allotment for an endpoint for a predefined time period, the endpoint operating as a mobile hotspot, and obtaining data representative of data usage for the endpoint for a portion of the predefined time period. Data usage for the endpoint is predicted for the predefined time period based on the data representative of data usage for a portion of the predefined time period. The bandwidth allocated to a data stream being provided to the endpoint is modified responsive to predicting that the data usage for the predefined time period will exceed the data allotment for the predefined time period. The modifying includes limiting or disabling data downloads for mobile hotspot client devices coupled with the endpoint.

### DESCRIPTION OF EXAMPLE EMBODIMENTS

This description provides examples not intended to limit the scope of the appended claims. The figures generally indicate the features of the examples, where it is understood and appreciated that like reference numerals are used to refer to like elements. Reference in the specification to "one embodiment" or "an embodiment" or "an example embodiment" means that a particular feature, structure, or characteristic described is included in at least one embodiment described herein and does not imply that the feature, structure, or characteristic is present in all embodiments described herein.

In an example embodiment, there is disclosed herein a technique where a service that knows the monthly data quota of a user and dynamically throttles the quality of rich media based on how much of the monthly data allotment for the user is still available. For example, if a subscriber uses NETFLIX, a Video Rental Service, to watch video streams which causes them to exceed their daily allotment, the service could react to the excessive bandwidth consumption by contacting the NETFLIX service and instructing NETFLIX to lower the quality of the video stream. The quality would remain lower until the subscriber was again within their daily allotment, at which point the service could increase the video quality.

To calculate the data allowance, several schemes could be used. For example, the data allowance may be calculated -hourly, -daily, or averaged over a fixed number of days. In an example embodiment, rationing of subscriber's data could be performed by a network middle-box residing in the service provider's network either in a regional data center or perhaps at individual cell towers. The middle-box could be transparent to both user and the service provider's customer data network and could provide media re-sampling services to manage a subscriber's bandwidth consumption. In contrast to existing solutions, which adjust subscriber's bandwidth consumption based on the service provider's network loading, this service could adjust subscriber's bandwidth consumption based on the amount of data allocation remaining for a billing cycle and an allocation strategy. An aspect of an example embodiment utilizes bandwidth management to optimize an end user's experience based on the end user's data plan, past consumption and position in the billing cycle.

In an example embodiment, a browser from a computing device, such as a smart phone or tablet, would connect to a network proxy. This proxy will monitor the data allowance for the user and, based on the user's allowance, re-encode the web page to lower data usage. For example, if the user is running over their data allowance for the hour or for the day, the proxy service could re-compress all the images on the web page. Depending on the amount of data allowance the user has left, the image re-encoding could be more or less aggressive. The same mechanism could re-encode video or music streams to allow the user continued access to the internet although at a lower fidelity level.

In an example embodiment, the service is adapted for shared mobile data plans, e.g., plans allow multiple users to share a fixed amount of data transfers per month. Using the service, some of the users on the shared plan could be allowed to access video and music streams while other users would be blocked from accessing video and music streams and/or the transcoding rules for some of the users are more stringent.

In an example embodiment, the service may be implemented in a VDI (Virtual Desktop Infrastructure) environment. For example, an administrator could allocate a monthly data quota to VDI users. If a user exceeds their allotment, their internet experience could be degraded. For example, it is common to transcode video streams in a virtual desktop prior to sending it to the endpoint. Based on the users monthly data allotment, the video quality could be sacrificed to keep a user under their data cap.

In an example embodiment, a local agent may be installed on a user's computing device. The local agent would monitor bandwidth usage and when a threshold is reached lower the usage by changing configuration options to minimize bandwidth usage. For example, the email and calendar sync options could be disabled or lowered in frequency. If the user is using a cell phone, the agent could disable email/calendar sync, and/or disable application updates, unless the user was on WiFi instead of a cellular or other network. Finally, the users' browser could be throttled by limiting downloads to text and ignore images on websites.

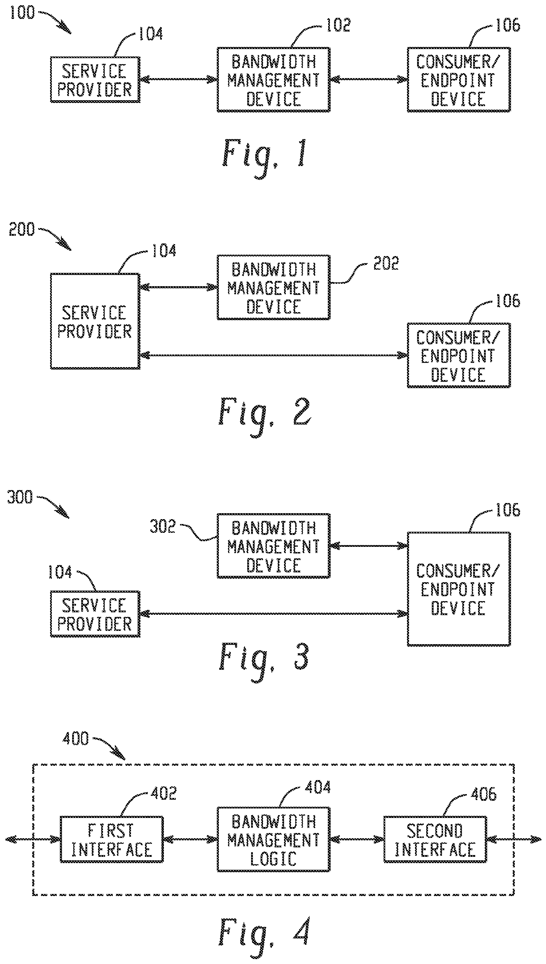

FIG. 1 is a block diagram illustrating an example 100 where a bandwidth monitoring device 102 is deployed between a service provider 104 and an endpoint 106. The bandwidth management device 102 suitably comprises logic for implementing the functionality described herein. "Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit ("ASIC"), system on a chip ("SoC"), programmable system on a chip ("PSOC"), a programmable/programmed logic device, memory device containing instructions, or the like, or combinational logic embodied in hardware. Logic may also be fully embodied as software stored on a non-transitory, tangible medium which performs a described function when executed by a processor. Logic may suitably comprise one or more modules configured to perform one or more functions.

In the illustrated example, the bandwidth management device 102 comprises a first interface for communicating with a provider 104 that provides a data stream to the endpoint 106 and a second interface for providing the data stream to the endpoint 106. In an example embodiment, the data stream may be an audio stream, a video stream, an audiovisual stream, a text data stream, or any combination of the aforementioned data streams. The bandwidth management device 102 obtains data representative of a data allotment for the endpoint 106 for a predefined time period, such as a billing cycle. The bandwidth management device 102 obtains data representative of data usage for a portion of the predefined time period. The bandwidth management device 102 predicts data usage for the predefined time period based on the data representative of data usage for a portion of the predefined time period. The predicted data usage may be based on any suitable parameter such as hourly data usage, daily data usage, or the average of data usage over a given time period such as a fixed number of days. For example, (predicted usage = current usage + (rate x remaining)) time in predefined time period.

In an example embodiment, the bandwidth management device 102 modifies the data stream. In another example embodiment, the bandwidth management device 102 signals the provider 104 to modify the data stream.

Any suitable technique for modifying the data stream. For example, the bandwidth management device 102, or the provider 104 may re-sample, re-encode, re-compress the data stream or perform any combination of re-sampling, re-encoding, re-compressing the data stream. In particular embodiments, where a content provider makes several versions (for example, with different quality, e.g., resolutions, or bandwidth requirements) of a stream available, the bandwidth management device 102 can selectively provide a lower quality stream, obviating the need to re-sample, re-encode, and/or re-compress the stream.

In an example embodiment, synchronization options for the endpoint 106 are changed in response to predicting that the data usage for the predefined time period will exceed the data allotment for the predefined time period. For example, the change in synchronization options may be selected from a group consisting of changing a frequency of calendar updates and changing a frequency of checking for new emails. As another example, the synchronization of calendar data and/or email data can be disabled in response to predicting that the data usage for the predefined time period will exceed the data allotment for the predefined time period. In particular embodiments, downloading of attachments to email messages can be disabled in response to predicting that the data usage for the predefined time period will exceed the data allotment for the predefined time period

In yet another example embodiment, the endpoint 106 may synchronize calendar data and/or email data using an alternate link. For example, if bandwidth monitoring device 102 is monitoring a wireless cellular channel for the endpoint 106, if the predicted data usage for endpoint 106 exceeds the allocated data usage, endpoint 106 may stop updating calendar and/or email data over the cellular channel, but employ a WiFi or Bluetooth link for updates when available. For example, many phones automatically put their WiFi transceiver to sleep to save power. However, the end result of putting the WiFi transceiver to sleep is that they wind up using cellular data. Therefore, in an example embodiment, if the predicted data usage for endpoint 106 exceeds the allocated data usage, logic in endpoint 106 will wake up the WiFi transceiver when a predefined condition is met (such as moving to a location where WiFi is known to be available, or at periodic intervals, etc.) and to use the WiFi transceiver for data communications.

In an example embodiment, the type of data endpoint 106 can receive (e.g., download) can be restricted. For example, if a data stream includes video, audio, and text content, the video and/or audio content may be stripped by provider 104 before sending the data stream to endpoint 106.

In an example embodiment, a plurality of users may be associated with the endpoint 106. The multiple users may share a fixed amount of data. The bandwidth monitoring device 102 may allow some of the users of the shared plan to access video and/or music streams while other users would be restricted for receiving audio and/or music streams. In particular embodiments, the quality of audio and/or video streams may be limited to a predefined maximum for certain users.

In an example embodiment, the bandwidth monitoring device 102 can manage the sharing of an endpoint device 106. For example, endpoint device 106 can be employed as a mobile hotspot. The bandwidth monitoring device 102 can limit and/or disable video, audio, and data downloads for mobile hotspot client devices coupled with endpoint device 106.

In an example embodiment, the bandwidth management device 102 updates the predicted data use for the endpoint 106 based on updated data representative of data usage. The updates may be periodic or aperiodic. The data stream may be modified until the predicted data usage is less than or equal to the allocated data usage.

In particular embodiments, the bandwidth management device 102 increases bandwidth allocated to the data stream responsive to predicting that the data usage for the predefined time period is less than the data allotment for the predefined time period. The data stream may be modified accordingly. For example, less aggressive compression and/or a high quality encoding may be employed.

FIG. 2 is a block diagram illustrating an example 200 of bandwidth monitoring device 202 coupled with a service provider 104. For example, bandwidth monitoring device 202 may be a process running at the service provider 104. In illustrated example 200, the bandwidth monitoring device 202 is not in the data path between the service provider 104 and the endpoint 106. The bandwidth management device 202 receives data representative of data usage from the service provider 104 and predicts the amount of data endpoint 106 will consume for a predetermined time period. The predicted data usage may be based on any suitable parameter such as hourly data usage, daily data usage, or the average of data usage over a given time period such as a fixed number of days. In the illustrated example 200, the bandwidth management device 202 signals the provider 104 to modify the data stream.

The provider 104 may utilize any suitable technique for modifying the data stream. For example, the provider 104 may re-sample, re-encode, re-compress the data stream or perform any combination of re-sampling, re-encoding, re-compressing the data stream. In an example embodiment, the provider and/or the endpoint device 106 may rate limit the data stream to prevent the endpoint device 106 from exceeding its allocation. For example, a data stream that was compressed using a lossless algorithm may be recompressed using a lossy algorithm, reducing fidelity to reduce data consumption.

In an example embodiment, the provider 104 may restrict the type of data endpoint 106 can receive. For example, if a data stream includes video, audio, and text content, the video and/or audio content may be stripped by provider 104 before sending the data stream to endpoint 106.

In an example embodiment, a plurality of users may be associated with the endpoint 106. The multiple users may share a fixed amount of data. The bandwidth monitoring device 202 may allow some of the users of the shared plan to access video and/or music streams while other users would be restricted from receiving audio and/or music streams. In particular embodiments, the quality of audio and/or video streams may be limited to a predefined maximum for certain users.

In an example embodiment, the bandwidth management device 202 updates the predicted data use for endpoint 106 based on updated data representative of data usage. The updates may be periodic or aperiodic. The data stream may be modified until the predicted data usage is less than or equal to the allocated data usage.

In particular embodiments, the bandwidth management device 202 informs service provider 104 that service provider 104 may increase the bandwidth allocated to the data stream responsive to predicting that the data usage for the predefined time period is less than the data allotment for the predefined time period. The data stream may be modified accordingly. For example, less aggressive compression and/or a high quality encoding may be employed.

FIG. 3 is a block diagram illustrating an example 300 of a bandwidth monitoring device 302 coupled with an endpoint 106. For example, bandwidth monitoring device 302 may be a local agent running on endpoint device 106. In the illustrated example 300, the bandwidth monitoring device 300 receives data representative of data usage from the endpoint device 106 and signals the endpoint device 106 to take corrective action if the predicted data usage for the predefined time period exceeds the data allotment for the time period. For example, endpoint 106 may signal the service provider 302 to modify the properties of a data stream being provided by service provider 104 to endpoint 106. For example, endpoint 106 may request the service provider 104 to use a more aggressive compression algorithm, change the sampling rate, and/or employ a lower quality codec in response to receiving an indication from bandwidth management device 302 determining that the predicted data usage will exceed that allocated data usage.

In an example embodiment, synchronization options for the endpoint 106 are changed in response to predicting that the data usage for the predefined time period will exceed the data allotment for the predefined time period. For example, the change in synchronization options may be selected from a group consisting of changing a frequency of calendar updates and changing a frequency of checking for new emails. As another example, the synchronization of calendar data and/or email data can be disabled in response to predicting that the data usage for the predefined time period will exceed the data allotment for the predefined time period.

In yet another example embodiment, the endpoint 106 may synchronize calendar data and/or email data using an alternate link. For example, if bandwidth monitoring device 302 is monitoring a wireless cellular channel for the endpoint 106, if the predicted data usage for endpoint 106 exceeds the allocated data usage, endpoint 106 may stop updating calendar and/or email data over the cellular channel, but employ a WiFi or Bluetooth link for updates when available.

In an example embodiment, the type of data endpoint 106 can receive (e.g., download) can be restricted. For example, if a data stream includes video, audio, and text content, the video and/or audio content may be stripped by provider 104 before sending the data stream to endpoint 106.

In an example embodiment, a plurality of users may be associated with the endpoint 106. The multiple users may share a fixed amount of data. The bandwidth monitoring device 302 may allow some of the users of the shared plan to access video and/or music streams while other users would be restricted for receiving audio and/or music streams. In particular embodiments, the quality of audio and/or video streams may be limited to a predefined maximum for certain users.

In an example embodiment, the bandwidth management device 302 updates the predicted data use for endpoint 106 based on updated data representative of data usage. The updates may be periodic or aperiodic. The data stream may be modified and/or the synchronizing of calendar and email data may be suppressed until the predicted data usage is less than or equal to the allocated data usage.

In particular embodiments, the bandwidth management device 302 informs the endpoint 106 that the bandwidth allocated to the data stream may be increased responsive to predicting that the data usage for the predefined time period is less than the data allotment for the predefined time period. The data stream may be modified accordingly. For example, less aggressive compression and/or a high quality encoding may be employed.

FIG. 4 is a block diagram of an example bandwidth monitoring device 400. The bandwidth monitoring device 400 comprises a first interface 402 and bandwidth management logic 404. Optionally, for example if bandwidth monitoring device is to be configured similar to the bandwidth monitoring device 102 illustrated in FIG. 1, bandwidth monitoring device 400 further comprises a second interface 406, where the first interface 402 is coupled with a provider (not shown, *see e.g.,* provider 104 in FIGs. 1-3) of a data stream and the second interface 406 is coupled with the endpoint (not shown, *see e.g.,* endpoint 106 in FIGs. 1-3).

The bandwidth management logic 404 obtains data representative of a data allotment for the endpoint 106 for a predefined time period, such as a billing cycle. The bandwidth management logic 404 obtains data representative of data usage for a portion of the predefined time period. The bandwidth management logic 404 predicts data usage for the predefined time period based on the data representative of data usage for a portion of the predefined time period. The predicted data usage may be based on any suitable parameter such as hourly data usage, daily data usage, or the average of data usage over a given time period, such as a fixed number of days.

In an example embodiment, the bandwidth management logic 404 modifies the data stream. In another example embodiment, the bandwidth management logic 404 signals the provider to modify the data stream.

Any suitable technique for modifying the data stream. For example, the bandwidth management logic 404, or the provider may re-sample, re-encode, re-compress the data stream or perform any combination of re-sampling, re-encoding, re-compressing the data stream.

In an example embodiment, synchronization options for the endpoint are changed in response to predicting that the data usage for the predefined time period will exceed the data allotment for the predefined time period. For example, the change in synchronization options may be selected from a group consisting of changing a frequency of calendar updates and changing a frequency of checking for new emails. As another example, the synchronization of calendar data and/or email data can be disabled in response to predicting that the data usage for the predefined time period will exceed the data allotment for the predefined time period.

In yet another example embodiment, the endpoint may synchronize calendar data and/or email data using an alternate link. For example, if bandwidth monitoring logic 404 is monitoring a wireless cellular channel for the endpoint, if the predicted data usage for endpoint exceeds the allocated data usage, endpoint may stop updating calendar and/or email data over the cellular channel, but employ a WiFi or Bluetooth link for updates when available.

In an example embodiment, the type of data endpoint can receive (e.g., download) can be restricted. For example, if a data stream includes video, audio, and text content, the video and/or audio content may be stripped by provider 104 before sending the data stream to endpoint 106.

In an example embodiment, a plurality of users, or devices in the case of a mobile hotspot, may be associated with the endpoint. The multiple users may share a fixed amount of data. The bandwidth monitoring logic 404 may allow some of the users of the shared plan to access video and/or music streams while other users would be restricted for receiving audio and/or music streams. In particular embodiments, the quality of audio and/or video streams may be limited to a predefined maximum for certain users.

In an example embodiment, the bandwidth management logic 404 updates the predicted data use for the endpoint based on updated data representative of data usage. The updates may be periodic or aperiodic. The data stream may be modified until the predicted data usage is less than or equal to the allocated data usage.

In particular embodiments, the bandwidth management logic 404 increases bandwidth allocated to the data stream responsive to predicting that the data usage for the predefined time period is less than the data allotment for the predefined time period. The data stream may be modified accordingly. For example, less aggressive compression and/or a high quality encoding may be employed.

Although the example embodiment illustrated herein comprises single first interface 402 (or interface that receives the stream from the provider) and single second interface 406 (or interface that provides a stream to the endpoint), those skilled in the art should readily appreciate that the bandwidth monitoring device 400 may suitably comprise plurality of first interfaces 402 and/or second interfaces 406. Moreover, in particular embodiments, a plurality of devices may be coupled to either the first interface 402 and/or second interface 406.

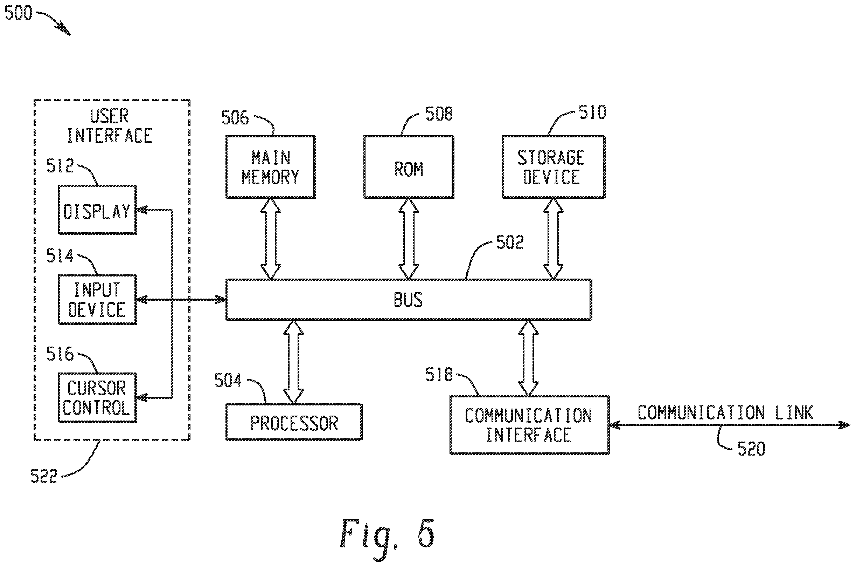

FIG. 5 is a block diagram that illustrates a computer system 500 upon which an example embodiment may be implemented. Computer system 500 may be employed to implement the functionality described herein for bandwidth management device 102 (FIG. 1), bandwidth management device 202 (FIG. 2), bandwidth management device 302 (FIG. 3), and/or bandwidth management logic 404 (FIG. 4).

Computer system 500 includes a bus 502 or other communication mechanism for communicating information and a processor 504 coupled with bus 502 for processing information. Computer system 500 also includes a main memory 506, such as random access memory (RAM) or other dynamic storage device coupled to bus 502 for storing information and instructions to be executed by processor 504. Main memory 506 also may be used for storing a temporary variable or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk, optical disk, and/or flash storage, is provided and coupled to bus 502 for storing information and instructions.

In an example embodiment, computer system 500 comprises a user interface 522 coupled to bus 502. User interface 522 can allow data representative of data allotments for a predefined time period to be obtained. The user interface may suitably comprise a display 512 such as a cathode ray tube (CRT) or liquid crystal display (LCD), for displaying information to a computer user. In particular embodiments, user interface 522 comprises an input device 514, such as a keyboard including alphanumeric and other keys, is coupled to bus 502 for communicating information and command selections to processor 504. Another type of user input device is cursor control 516, such as a mouse, a trackball, cursor direction keys, and/or a touchscreen for communicating direction information and command selections to processor 504 and for controlling cursor movement on display 512. This input device typically has two degrees of freedom in two axes, a first axis (e.g., x) and a second axis (e.g., y) that allows the device to specify positions in a plane.

An aspect of the example embodiment is related to the use of computer system 500 for dynamic media throttling based on data quotas. According to an example embodiment, dynamic media throttling based on data quotas is provided by computer system 500 in response to processor 504 executing one or more sequences of one or more instructions contained in main memory 506. Such instructions may be read into main memory 506 from another computer-readable medium, such as storage device 510. Execution of the sequence of instructions contained in main memory 506 causes processor 504 to perform the process steps described herein. One or more processors in a multi-processing arrangement may also be employed to execute the sequences of instructions contained in main memory 506. In alternative embodiments, hard-wired circuitry may be used in place of or in combination with software instructions to implement an example embodiment. Thus, embodiments described herein are not limited to any specific combination of hardware circuitry and software.

The term "computer-readable medium" as used herein refers to any medium that participates in providing instructions to processor 504 for execution. Such a medium may take many forms, including but not limited to non-volatile media, and volatile media. Non-volatile media include, for example, optical or magnetic disks, such as storage device 510. Volatile media include dynamic memory such as main memory 506. As used herein, tangible media may include volatile and non-volatile media. Common forms of computer-readable media include, for example, floppy disk, a flexible disk, hard disk, magnetic cards, paper tape, any other physical medium with patterns of holes, a RAM, a PROM, an EPROM, a FLASHPROM, CD, DVD or any other memory chip or cartridge, or any other medium from which a computer can read.

Various forms of computer-readable media may be involved in carrying one or more sequences of one or more instructions to processor 504 for execution. For example, the instructions may initially be borne on a magnetic disk of a remote computer. The remote computer can load the instructions into its dynamic memory and send the instructions over a telephone line using a modem. A modem local to computer system 500 can receive the data on the telephone line and use an infrared transmitter to convert the data to an infrared signal. An infrared detector coupled to bus 502 can receive the data carried in the infrared signal and place the data on bus 502. Bus 502 carries the data to main memory 506 from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling computer system 500 to a communication link 520 that is connected to a network (not shown). This can allow computer system 500 to communicate with a service provider and/or an endpoint. In particular embodiments, multiple communication interfaces 518 may be employed to communicate over multiple communication links 520.

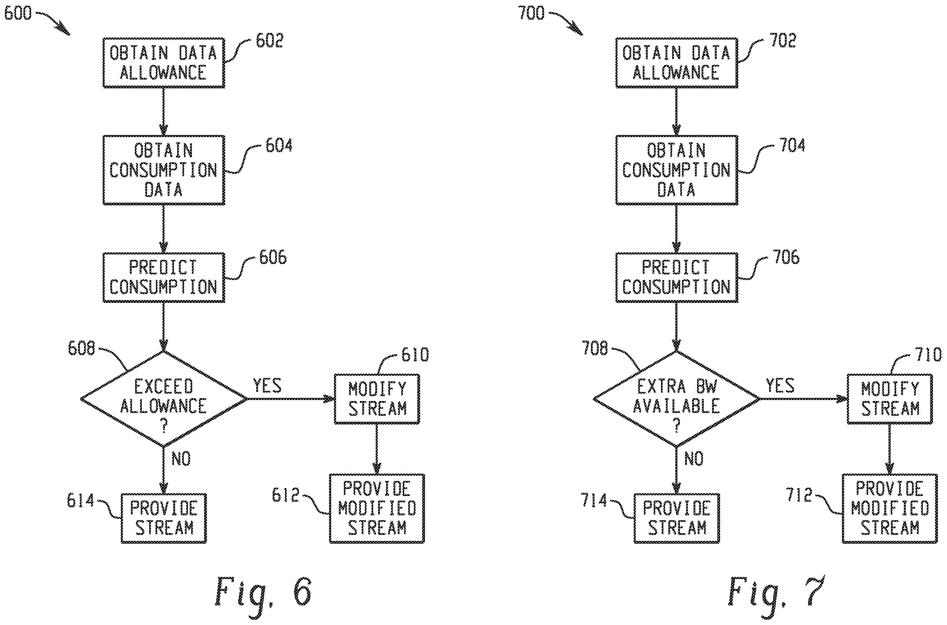

In view of the foregoing structural and functional features described above, methodologies in accordance with example embodiments will be better appreciated with reference to FIGs. 6 and 7. While, for purposes of simplicity of explanation, the methodologies of FIGs. 6 and 7 are shown and described as executing serially, it is to be understood and appreciated that the example embodiments are not limited by the illustrated orders, as some aspects could occur in different orders and/or concurrently with other aspects from that shown and described herein. Moreover, not all features illustrated herein may be required. The methodologies described herein is suitably adapted to be implemented in hardware, software, or a combination thereof.

FIG. 6 illustrates an example methodology 600 that modifies a data stream in response to determining that predicted data consumption will exceed a data allowance. Methodology 600 may be implemented by bandwidth management device 102 (FIG. 1), bandwidth management device 202 (FIG. 2), bandwidth management device 302 (FIG. 3), bandwidth management logic 404 (FIG. 4), and/or computer system 500 (FIG. 5).

At 602, data representative of a data allowance for an endpoint (or device) for a predefined time period is obtained. The data may be received electronically from a server or other device and/or may be manually entered via a keyboard, mouse, touchscreen, or other input device. The predefined time period may be any desired time period, such as a billing cycle.

At 604, data representative of data usage for a portion of the predefined time period for the endpoint is obtained. The data may be received from the endpoint itself, from the service provider, and/or by the device implementing methodology 600.

At 606, data usage for the endpoint is predicted for the predetermined time period. The predicted data usage for the predefined time period can be based on the data representative of data usage for a portion of the predefined time period. The predicted data usage may be based on any suitable parameter such as hourly data usage, daily data usage, or the average of data usage over a given time period, such as a fixed number of days. For example, (predicted usage = current usage + (rate x remaining time)) in predefined time period, where rate may be an average rate over the portion of the predefined time period that usage data has been obtained. In an example embodiment, usage data can be predicted by looking at past data utilization. In another example embodiment, a user associated with an endpoint device may be asked what websites the user visits and whether the user watches video and/or listens to online music. In still yet another example embodiment, the user's web browser bookmarks can be read and/or stored in browser web history can be read to estimate data consumption.

At 608, a determination is made on whether the predicted consumption calculated at 606 will exceed the allowance obtained at 602. If the predicted consumption is greater than the allotted amount (YES), at 610 the data stream is modified. For example, the data stream may be re-sampled, re-encoded and/or recompressed in order to use less bandwidth, or the stream may be obtained from different source, such as a source providing the stream at a lower quality. In an example embodiment, audio, visual, and/or audiovisual streams are modified to use less bandwidth, which may result in a lower quality stream. The modified data stream is provided to the endpoint, as illustrated by 612.

If, at 608, a determination is made that the predicted consumption will not exceed the allowed amount (NO), the data stream is provided unmodified to the endpoint as illustrated at 614. In particular embodiments (*see e.g.,* FIG. 7), if sufficient bandwidth is available the data stream may be modified to make use of the additional bandwidth, which may result in providing of a higher quality data stream, such as an audio, video, and/or audiovisual data stream.

In an example embodiment, the methodology 600 is repeated. The methodology 600 may be repeated at periodic and/or aperiodic intervals. Thus, a data stream may be modified while the predicted consumption exceeds the allowance, and if the predicted amount becomes less than or equal to the allowance, the data stream may be provided unmodified.

FIG. 7 illustrates an example of a methodology 700 that modifies a data stream in response to determining that predicted data consumption will not exceed a data allowance. Methodology 700 may be implemented by bandwidth management device 102 (FIG. 1), bandwidth management device 202 (FIG. 2), bandwidth management device 302 (FIG. 3), bandwidth management logic 404 (FIG. 4), and/or computer system 500 (FIG. 5).

At 702, data representative of a data allowance for an endpoint (or device) for a predefined time period is obtained. The data may be received electronically from a server or other device and/or may be manually entered via a keyboard, mouse, touchscreen, or other input device. The predefined time period may be any desired time period, such as a billing cycle.

At 704, data representative of data usage for a portion of the predefined time period for the endpoint is obtained. The data may be received from the endpoint itself, from the service provider, and/or by the device implementing methodology 600.

At 706, data usage for the endpoint is predicted for the predetermined time period. The predicted data usage for the predefined time period can be based on the data representative of data usage for a portion of the predefined time period. The predicted data usage may be based on any suitable parameter such as hourly data usage, daily data usage, or the average of data usage over a given time period such as a fixed number of days. For example, (predicted usage = current usage + (rate x remaining time)) in predefined time period, where rate may be an average rate over the portion of the predefined time period that usage data has been obtained.

At 708, a determination is made on whether the predicted consumption calculated at 706 is less than the allowance obtained at 702. If the predicted consumption is less than the allotted amount (YES), at 710 the data stream may be modified. For example, the data stream may be re-sampled, re-encoded and/or recompressed in order to use more bandwidth, up to the available bandwidth. In an example embodiment, audio, visual, and/or audiovisual streams are modified to use more bandwidth, which may result in a higher quality stream. The modified data stream is provided to the endpoint, as illustrate by 712. If, at 708, a determination is made that there is no extra bandwidth available (NO), the data stream is provided unmodified to the endpoint as illustrated at 714.

In an example embodiment, the methodology 700 is repeated. The methodology 700 may be repeated at periodic and/or aperiodic intervals. Thus, a data stream may be modified while the predicted consumption is less than the allowance, and if the predicted amount becomes greater than the allowance, the data stream may be provided unmodified.

Described above are example embodiments. It is, of course, not possible to describe every conceivable combination of components or methodologies, but one of ordinary skill in the art will recognize that many further combinations and permutations of the example embodiments are possible. Accordingly, this application is intended to embrace all such alterations, modifications and variations that fall within the scope of the appended claims interpreted in accordance with the breadth to which they are fairly, legally and equitably entitled.

## Claims

1. An apparatus (400), comprising:
a first interface (402) for communicating with a provider (104) that is providing a data stream to an endpoint (106) operating as a mobile hotspot;
a second interface (406) for providing the data stream to the endpoint; and
bandwidth management logic (404) coupled with the first interface and the second interface;
wherein the bandwidth management logic is configured to:
obtain data representative of a data allotment for the endpoint for a predefined time period;
obtain data representative of data usage for the endpoint for a portion of the predefined time period;
predict data usage for the endpoint for the predefined time period based on the data representative of data usage for the portion of the predefined time period; and
modify the data stream being provided to the endpoint in response to predicting that the data usage for the predefined time period will exceed the data allotment for the predefined time period, the modifying including limiting or disabling data downloads for mobile hotspot client devices coupled with the endpoint.

2. The apparatus set forth in claim 1, wherein the bandwidth management logic is configured to signal the provider to modify the data stream.

3. The apparatus set forth in claim 1, further comprising changing data synchronization options for the endpoint, wherein the change in synchronization options is selected from a group consisting of changing a frequency of calendar updates and changing a frequency of checking for new emails.

4. The apparatus set forth in claim 3, wherein the bandwidth management logic is configured to disable synchronization of calendar data and email data in response to predicting that the data usage for the predefined time period will exceed the data allotment for the predefined time period.

5. The apparatus set forth in claim 1, wherein in response to the prediction the endpoint is configured to perform synchronization of calendar data and email data using an alternate link.

6. The apparatus set forth in claim 1, wherein in response to the prediction the data stream is restricted to text data.

7. The apparatus set forth in claim 1, wherein the data allotment is for a plurality of users associated with the endpoint; and
wherein in response to the prediction the bandwidth management logic is configured to restrict individual user access to certain types of data streams.

8. The apparatus set forth in claim 1, wherein the bandwidth management logic is configured to modify the data stream to increase bandwidth allocated to the data stream responsive to predicting that the data usage for the predefined time period will not exceed the data allotment for the predefined time period.

9. A method, comprising:
obtaining data representative of a data allotment for an endpoint (106) for a predefined time period, the endpoint operating as a mobile hotspot;
obtaining data representative of data usage for the endpoint for a portion of the predefined time period;
predicting data usage for the endpoint for the predefined time period based on the data representative of data usage for the portion of the predefined time period; and
modifying a data stream being provided to the endpoint in response to predicting that the data usage for the predefined time period will exceed the data allotment for the predefined time period, the modifying including limiting or disabling data downloads for mobile hotspot client devices coupled with the endpoint.

10. Logic encoded in a non-transitory computer readable medium for execution by a processor, and when executed operable to perform a method according to claim 9.

## Patentansprüche

1. Vorrichtung (400), die aufweist:
eine erste Schnittstelle (402) zum Kommunizieren mit einem Anbieter (104), der einen Endpunkt (106), der als mobiler Hotspot betrieben wird, mit einem Datenstrom versorgt;
eine zweite Schnittstelle (406) zum Versorgen des Endpunkts mit dem Datenstrom; und
Bandbreitenmanagementlogik (404), die mit der ersten Schnittstelle und der zweiten Schnittstelle gekoppelt ist;
wobei die Bandbreitenmanagementlogik konfiguriert ist zum:
Erhalten von Daten, die für eine Datenzuteilung für den Endpunkt für einen vordefinierten Zeitabschnitt repräsentativ sind;
Erhalten von Daten, die für eine Datennutzung für den Endpunkt für einen Teil des vordefinierten Zeitabschnitts repräsentativ sind;
Vorhersagen der Datennutzung für den Endpunkt für den vordefinierten Zeitabschnitt auf Basis der Daten, die für die Datennutzung für den Teil des vordefinierten Zeitabschnitts repräsentativ sind; und
Modifizieren des Datenstroms, mit dem der Endpunkt versorgt wird, als Reaktion auf das Vorhersagen, dass die Datennutzung für den vordefinierten Zeitabschnitt die Datenzuteilung für den vordefinierten Zeitabschnitt überschreiten wird, wobei das Modifizieren das Begrenzen oder Deaktivieren von Daten-Downloads für mit dem Endpunkt gekoppelte mobile Hotspot-Client-Vorrichtungen beinhaltet.

2. Vorrichtung nach Anspruch 1, wobei die Bandbreitenmanagementlogik konfiguriert ist, um dem Anbieter ein Zeichen zu geben, den Datenstrom zu modifizieren.

3. Vorrichtung nach Anspruch 1, die ferner das Ändern von Datensynchronisationsoptionen für den Endpunkt aufweist, wobei das Ändern von Synchronisationsoptionen aus einer Gruppe bestehend aus dem Ändern einer Häufigkeit von Kalenderaktualisierungen und dem Ändern einer Häufigkeit des Prüfens auf neue E-Mails ausgewählt ist.

4. Vorrichtung nach Anspruch 3, wobei die Bandbreitenmanagementlogik konfiguriert ist zum Deaktivieren der Synchronisierung von Kalenderdaten und E-Mail-Daten als Reaktion auf das Vorhersagen, dass die Datennutzung für den vordefinierten Zeitabschnitt die Datenzuteilung für den vordefinierten Zeitabschnitt überschreiten wird.

5. Vorrichtung nach Anspruch 1, wobei der Endpunkt konfiguriert ist zum Durchführen von Synchronisation von Kalenderdaten und E-Mail-Daten unter Verwendung eines anderen Links als Reaktion auf das Vorhersagen.

6. Vorrichtung nach Anspruch 1, wobei als Reaktion auf das Vorhersagen der Datenstrom auf Textdaten beschränkt wird.

7. Vorrichtung nach Anspruch 1, wobei die Datenzuteilung für mehrere Benutzer ist, die dem Endpunkt zugeordnet sind; und
wobei die Bandbreitenmanagementlogik konfiguriert ist zum Beschränken des Zugriffs einzelner Benutzer auf gewisse Typen von Datenströmen als Reaktion auf die Vorhersage.

8. Vorrichtung nach Anspruch 1, wobei die Bandbreitenmanagementlogik konfiguriert ist zum Modifizieren des Datenstroms, auf das Vorhersagen reagierend, dass die Datennutzung für den vordefinierten Zeitabschnitt die Datenzuteilung für den vordefinierten Zeitabschnitt nicht überschreiten wird, zum Erhöhen der dem Datenstrom zugeteilten Bandbreite.

9. Verfahren, das aufweist:
Erhalten von Daten, die für eine Datenzuteilung für einen Endpunkt (106) für einen vordefinierten Zeitabschnitt repräsentativ sind, wobei der Endpunkt als mobiler Hotspot betrieben wird;
Erhalten von Daten, die für eine Datennutzung für den Endpunkt für einen Teil des vordefinierten Zeitabschnitts repräsentativ sind;
Vorhersagen der Datennutzung für den Endpunkt für den vordefinierten Zeitabschnitt auf Basis der Daten, die für die Datennutzung für den Teil des vordefinierten Zeitabschnitts repräsentativ sind; und
Modifizieren eines Datenstroms, mit dem der Endpunkt versorgt wird, als Reaktion auf das Vorhersagen, dass die Datennutzung für den vordefinierten Zeitabschnitt die Datenzuteilung für den vordefinierten Zeitabschnitt überschreiten wird, wobei das Modifizieren das Begrenzen oder Deaktivieren von Daten-Downloads für mit dem Endpunkt gekoppelte mobile Hotspot-Client-Vorrichtungen beinhaltet.

10. Logik, die zur Ausführung durch einen Prozessor in einem nichtflüchtigen computerlesbaren Medium codiert und bei Ausführung zum Durchführen eines Verfahrens nach Anspruch 9 funktionell ist.

## Revendications

1. Appareil (400), comprenant:
une première interface (402) pour communiquer avec un fournisseur (104) qui fournit un train de données à un point d'accès (106) fonctionnant en tant que borne mobile;
une seconde interface (406) pour fournir le train de données au point d'accès; et
une logique de gestion de largeur de bande (404) couplée à la première interface et à la seconde interface ;
dans lequel la logique de gestion de largeur de bande est configurée pour:
obtenir des données représentatives d'une allocation de données au point d'accès pendant une période de temps prédéfinie;
obtenir des données représentatives d'une utilisation de données du point d'accès pendant une partie de la période de temps prédéfinie;
prédire l'utilisation du point d'accès pendant la période de temps prédéfinie en fonction des données représentatives de l'utilisation des données pendant la partie de la période de temps prédéfinie; et
modifier le train de données fourni au point d'accès en réponse à la prédiction que l'utilisation des données pendant la période de temps prédéfinie va dépasser l'allocation de données pendant la période de temps prédéfinie, la modification comportant la limitation ou la désactivation des téléchargements de données pour les dispositifs clients de la borne mobile couplés au point d'accès.

2. Appareil selon la revendication 1, dans lequel la logique de gestion de largeur de bande est configurée pour signaler au fournisseur de modifier le train de données.

3. Appareil selon la revendication 1, comprenant en outre le changement d'options de synchronisation de données pour le point d'accès, dans lequel le changement d'options de synchronisation est sélectionné dans un groupe consistant en un changement de fréquence d'actualisations de calendrier et un changement d'une fréquence de vérification de nouveaux courriels.

4. Appareil selon la revendication 3, dans lequel la logique de gestion de largeur de bande est configurée pour désactiver la synchronisation de données de calendrier et des données de courrier électronique en réponse à la prédiction que l'utilisation de données pendant la période de temps prédéfinie va dépasser l'allocation de données pendant la période de temps prédéfinie.

5. Appareil selon la revendication 1, dans lequel en réponse à la prédiction le point d'accès est configuré pour exécuter une synchronisation de données de calendrier et de données de courrier électronique en utilisant une autre liaison.

6. Appareil selon la revendication 1, dans lequel en réponse à la prédiction, le train de données est limité à des données de texte.

7. Appareil selon la revendication 1, dans lequel l'allocation de données se rapporte à une pluralité d'utilisateurs associée au point d'accès ; et
dans lequel en réponse à la prédiction la logique de gestion de largeur de bande est configurée pour limiter l'accès des utilisateurs individuels à certains types de trains de données.

8. Appareil selon la revendication 1, dans lequel la logique de gestion de largeur de bande est configurée pour modifier le train de données pour augmenter la largeur de bande allouée au train de données en réponse à la prédiction que l'utilisation de données pendant la période de temps prédéfinie ne va pas dépasser l'allocation de données pendant la période de temps prédéfinie.

9. Procédé, comprenant:
l'obtention de données représentatives d'une allocation de données à un point d'accès (106) pendant une période de temps prédéfinie, le point d'accès faisant office de borne mobile;
l'obtention de données représentatives d'une utilisation de données du point d'accès pendant une partie de la période de temps prédéfinie;
la prédiction de l'utilisation de données du point d'accès pendant la période de temps prédéfinie en fonction des données représentatives de l'utilisation de données pendant la partie de la période de temps prédéfinie; et
la modification d'un train de données fourni au point d'accès en réponse à la prédiction que l'utilisation de données pendant la période de temps prédéfinie va dépasser l'allocation de données pendant la période de temps prédéfinie, la modification comportant la limitation ou la désactivation de téléchargements de données pour les dispositifs clients du point chaud mobile couplés au point d'accès.

10. Logique codée dans un support non transitoire lisible par ordinateur destinée à être exécutée par un processeur, et qui, à son exécution, est exploitable pour mettre en oeuvre un procédé selon la revendication 9.
